# EUROPEAN PATENT SPECIFICATION

(11) **EP 3 620 750 B1**
(45) Date of publication and mention of the grant of the patent: **31.08.2022**
(21) Application number: 19187243.1
(22) Date of filing: 19.07.2019
(51) Int. Cl.: G01C 21/34, G05D 1/02, G06N 3/08, G06N 3/04

(54) **AUTONOMOUS DRIVING ASSISTANCE METHOD, DRIVING DEVICE, ASSISTANCE DEVICE AND READABLE STORAGE MEDIUM**
AUTONOMES FAHRHILFEVERFAHREN, ANTRIEBSVORRICHTUNG, HILFSVORRICHTUNG UND LESBARES SPEICHERMEDIUM
PROCÉDÉ D'ASSISTANCE À LA CONDUITE AUTONOME, DISPOSITIF D'ENTRAÎNEMENT, DISPOSITIF D'ASSISTANCE ET SUPPORT D'ENREGISTREMENT LISIBLE

(30) Priority: 06.09.2018 CN 201811039166
(43) Date of publication of application: 11.03.2020
(73) Proprietor: Apollo Intelligent Driving Technology (Beijing) Co., Ltd., Haidian District Beijing 100085 (CN)
(72) Inventor: CHEN, Youhan, BEIJING, HAIDIAN DISTRICT 100085 (CN)
(74) Representative: Studio Torta S.p.A.

(56) References cited:
- US-A1- 2017 135 621
- US-A1- 2018 074 493
- US-B1- 9 201 421

## Description

### TECHNICAL FIELD

The present invention relates to autonomous driving technology, and more particularly to an autonomous driving assistance method, a driving device, an assistance device and a readable storage medium.

### BACKGROUND

With the development of science and technology and the advancement of society, autonomous driving technology has become a developing trend in the field of transportation.

In the prior art, a driving device performs an autonomous driving task through a preset autonomous driving model. The driving device collects current scene information in real time, and uses the autonomous driving model to process the scene information, so as to output a corresponding driving instruction to the driving device.

US 9 201 421 B1 discloses an autonomous driving assistance method, comprising: processing collected current scene information by using a current autonomous driving model preset in a driving device, and initiating an assistance driving request to an assistance device according to a processing result that the current autonomous driving model does not have capability of processing the current scene information, wherein the assistance device is an interactive terminal arranged at a remote end that is communicating with the driving device remotely; receiving and performing a driving instruction fedback by the assistance device, wherein the driving instruction is used to perform a following autonomous driving task.

However, since the autonomous driving model is preset in the driving device, once the driving device encounters complex terrain or a complex road condition, the problem would most likely to occur that the autonomous driving model processes the scene information, causing the driving device to fail to continue performing the autonomous driving task.

### SUMMARY

For the above-mentioned problem that when performing an autonomous driving task, an existing deriving device fails to continue performing the autonomous driving task since a preset autonomous driving model cannot process scene information, the present invention provides an autonomous driving assistance method, a driving device, an assistance device and a readable storage medium.

In one aspect, the present invention provides an autonomous driving assistance method, including:
processing collected current scene information by using a current autonomous driving model preset in a driving device, and initiating an assistance driving request to an assistance device according to a processing result that the current autonomous driving model does not have capability of processing the current scene information, where the assistance device is an interactive terminal arranged at a remote end that is communicating with the driving device remotely;
receiving and performing a driving instruction fedback by the assistance device, where the driving instruction is used to optimize the current autonomous driving model in conjunction with current scene information, so as to perform a following autonomous driving task by using the optimized autonomous driving model, where the driving instruction is triggered by a user;
where the processing collected current scene information by using the current autonomous driving model, and initiating the assistance driving request to the assistance device according to the processing result includes:
   processing the collected current scene information by using the current autonomous driving model to obtain the processing result;
   determining a confidence of the processing result;
   initiating the assistance driving request to the assistance device, when the confidence is less than a preset threshold;
   where the processing result comprises a matching degree for each driving instruction in a current scene and an autonomous driving instruction that most matches the current scene.

In an alternative embodiment, the autonomous driving model includes a deep learning algorithm model;
the driving instruction is specifically used to generate a training sample in conjunction with the current scene information; training the deep learning algorithm model by using the training sample to obtain a trained deep learning algorithm model; where the trained deep learning algorithm model is the optimized autonomous driving model.

In another aspect, the present invention provides an autonomous driving assistance method, including:
receiving an assistance driving request initiated by a driving device, where the driving device processes collected current scene information by using a current autonomous driving model preset in the driving device, and initiates the assistance driving request to an assistance device according to a processing result that the current autonomous driving model does not have capability of processing the current scene information, where the assistance device is an interactive terminal arranged at a remote end that is communicating with the driving device remotely;
receiving a driving instruction triggered by a user, and transmitting the driving instruction to the driving device, so that the driving instruction is performed by the driving device; where the driving instruction is used to optimize the current autonomous driving model in conjunction with current scene information, so as to perform a following autonomous driving task by using the optimized autonomous driving model;
where the driving device processes collected current scene information by using the current autonomous driving model, and initiates the assistance driving request to the assistance device according to the processing result includes:
   processing the collected current scene information by using the current autonomous driving model to obtain the processing result;
   determining a confidence of the processing result;
   initiating the assistance driving request to the assistance device, when the confidence is less than a preset threshold;
   where the processing result comprises a matching degree for each driving instruction in a current scene and an autonomous driving instruction that most matches the current scene.

In an alternative embodiment, the driving request and the driving instruction are transmitted to the driving device through a wireless mobile network.

In an alternative embodiment, the driving request and the driving instruction are transmitted to the driving device through near field communication technology.

In still another aspect, the present invention provides a driving device including:
a first processing unit, configured to process collected current scene information by using a current autonomous driving model preset in the driving device, and obtain a processing result;
a first communicating unit, configured to initiate an assistance driving request to an assistance device according to the processing result that the current autonomous driving model does not have capability of processing the current scene information, wherein the assistance device is an interactive terminal arranged at a remote end that is communicating with the driving device remotely; and further configured to receive a driving instruction fedback by the assistance device, so that the driving instruction is performed by the driving device, wherein the driving instruction is used to optimize the current autonomous driving model in conjunction with current scene information, so as to perform a following autonomous driving task by using the optimized autonomous driving model, where the driving instruction is triggered by a user;
where the first processing unit (10) is also configured to determine a confidence of the processing result; when the confidence is less than a preset threshold, the first communicating unit (11) initiates the assistance driving request to the assistance device; wherein the processing result comprises a matching degree for each driving instruction in a current scene and an autonomous driving instruction that most matches the current scene.

In an alternative embodiment, the autonomous driving model includes a deep learning algorithm model;
the driving instruction is specifically used to generate a training sample in conjunction with the current scene information; train the deep learning algorithm model by using the training sample to obtain a trained deep learning algorithm model; where the trained deep learning algorithm model is the optimized autonomous driving model.

In still another aspect, the present invention provides an assistance device, wherein the assistance device is an interactive terminal arranged at a remote end that is communicating with a driving device remotely, including:
a second communicating unit, configured to receive an assistance driving request initiated by the driving device, where the driving device processes collected current scene information by using a current autonomous driving model preset in the driving device, and initiates the assistance driving request to an assistance device according to a processing result that the current autonomous driving model does not have capability of processing the current scene information;
an interacting unit, configured to receive a driving instruction triggered by a user;
the second communicating unit is further configured to transmit the driving instruction to the driving device, so that the driving instruction is performed by the driving device; where the driving instruction is used to optimize the current autonomous driving model in conjunction with current scene information, so as to perform a following autonomous driving task by using the optimized autonomous driving model;
where the driving device processes collected current scene information by using the current autonomous driving model, and initiates the assistance driving request to the assistance device according to the processing result includes:
   processing the collected current scene information by using the current autonomous driving model to obtain the processing result;
   determining a confidence of the processing result;
   initiating the assistance driving request to the assistance device, when the confidence is less than a preset threshold;
   where the processing result comprises a matching degree for each driving instruction in a current scene and an autonomous driving instruction that most matches the current scene.

In an alternative embodiment, the driving request and the driving instruction are transmitted by the second communicating unit to the driving device through a wireless mobile network.

In an alternative embodiment, the driving request and the driving instruction are transmitted by the second communicating unit to the driving device through near field communication technology.

An autonomous driving assistance method, a driving device, an assistance device and a readable storage medium are provided by the present invention. The driving device processes collected current scene information by using a current autonomous driving model, and initiates an assistance driving request to an assistance device according to a processing result; receives and performs a driving instruction fedback by the assistance device, where the driving instruction is used to optimize the current autonomous driving model in conjunction with the current scene information, so as to perform a following autonomous driving task by using the optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

### BRIEF DESCRIPTION OF THE DRAWINGS

Through the above drawings, specific embodiments of the present disclosure have been shown, which will be described in more detail later. These drawings and the text are not intended to limit the scope of the present disclosure in any way, but to illustrate concepts of the present disclosure to those skilled in the art with reference to the specific embodiments.
FIG. 1 is a schematic diagram of a network architecture on which the present invention is based;
FIG. 2 is a schematic flowchart diagram of an autonomous driving assistance method according to Embodiment 1 of the present invention ;
FIG. 3 is a schematic flowchart diagram of an autonomous driving assistance method according to Embodiment 2 of the present invention ;
FIG. 4 is a schematic flowchart diagram of an autonomous driving assistance method according to Embodiment 3 of the present invention ;
FIG. 5 is a schematic flowchart diagram of an autonomous driving assistance method according to Embodiment 4 of the present invention ;
FIG. 6 is a schematic structural diagram of a driving device according to Embodiment 5 of the present invention;
FIG. 7 is a schematic structural diagram of an assistance device according to Embodiment 6 of the present invention;
FIG. 8 is a schematic diagram of a hardware structure of a driving device according to Embodiment 7 of the present invention; and
FIG. 9 is a schematic diagram of a hardware structure of an assistance device according to Embodiment 8 of the present invention.

The drawings mentioned herein are incorporated in and constitute a part of the specification, where embodiments consistent with the present disclosure are shown to explain principles of the present disclosure together with the specification.

### DETAILED DESCRIPTION OF THE EMBODIMENTS

In order to make the objectives, technical solutions, and advantages of the embodiments of the present invention more clearly, the technical solutions in the embodiments of the present invention are described clearly and comprehensively in the following with reference to the accompanying drawings of the embodiments of the present invention.

With the development of science and technology and the advancement of society, autonomous driving technology has become a developing trend in the field of transportation.

In the prior art, a driving device performs an autonomous driving task through a preset autonomous driving model. The driving device collects current scene information in real time, and uses the autonomous driving model to process the scene information, so as to output a corresponding driving instruction to the driving device.

However, since the autonomous driving model is preset in the driving device, once the driving device encounters complex terrain or a complex road condition, the problem would most likely to occur that the autonomous driving model processes the scene information, causing the driving device to fail to continue performing the autonomous driving task.

For the above-mentioned problem that when performing an autonomous driving task, an existing deriving device fails to continue performing the autonomous driving task since a preset autonomous driving model cannot process scene information, the present invention provides an autonomous driving assistance method, a driving device, an assistance device and a readable storage medium. It should be noted that the autonomous driving assistance method, the device and the readable storage medium provided by the present application can be applied to application scenarios where autonomous driving is employed, and these application scenarios include, but are not limited to, a manned driverless scenario, a scenario that a non-manned unmanned machine automatically executes engineering tasks including path finding and the like.

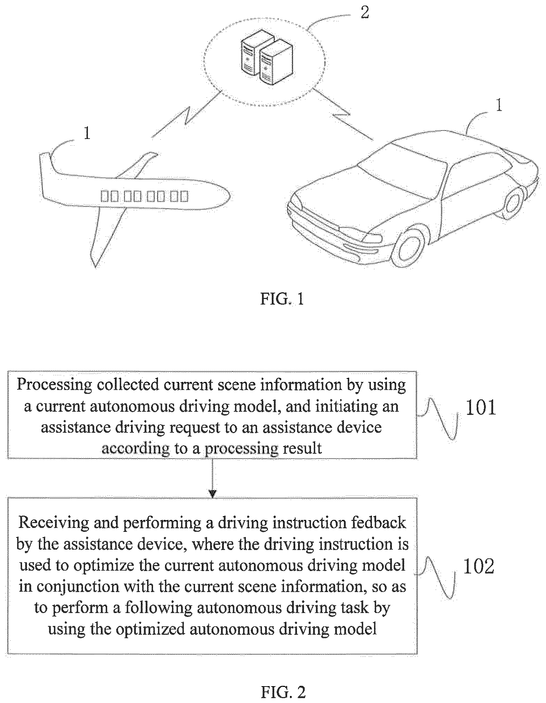

FIG. 1 is a schematic diagram of a network architecture on which the present invention is based. As shown in FIG. 1, the network architecture on which the present invention is based at least includes: a driving device 1 and an assistance device 2, where the driving device 1 refers to a device or a module in a motorized device such as an unmanned vehicle, an unmanned aerial vehicle, or an unmanned robot etc.. The assistance device 2 refers to a human-machine interaction terminal that can have a communication connection with the driving device 1 and perform data interactions.

FIG. 2 is a schematic flowchart diagram of an autonomous driving assistance method according to Embodiment 1 of the present invention.

As shown in FIG. 2, the autonomous driving assistance method includes:
Step101, processing collected current scene information by using a current autonomous driving model, and initiating an assistance driving request to an assistance device according to a processing result.
Step102, receiving and performing a driving instruction fedback by the assistance device, wherein the driving instruction is used to optimize the current autonomous driving model in conjunction with the current scene information, so as to perform a following autonomous driving task by using the optimized autonomous driving model.

It should be noted that an execution body of the autonomous driving assistance method provided by the present invention may specifically be a driving device shown in FIG. 1. Specifically, the present invention provides an autonomous driving assistance method, first, during performing the autonomous driving task, the driving device needs to continuously receive current scene information collected by a collecting module on a motorized device, where the collecting module includes an image capturing device disposed on the motorized device, and may further include a sensor unit disposed within the motorized device for sensing or testing an operational status and operational parameters of the motorized device. After receiving the current scene information, the driving device inputs the current scene information into the current autonomous driving model, and the information is analyzed and processed by the autonomous driving model to output a processing result. The autonomous driving model may use an existing model architecture, according to the invention, the output processing result includes a matching degree for each driving instruction in the current scene, and an autonomous driving instruction that most matches the current scene.

The driving device may initiate the assistance driving request to the assistance device according to the processing result, so that the assistance device returns a corresponding driving instruction to the driving device, in a way of triggering the driving instruction by a user, after receiving the assisting driving request initiated by the driving device. The driving device may execute the driving instruction after receiving it.

Different from the prior art, in the present embodiment, in order to improve intelligence of the driving device to enable it to identify more complex terrain, in the case that a driving device needs to initiate an assisting driving request to the assistance device, it can optimize a current autonomous driving model by using the received driving instruction fedback by the assistance device and the current scene information collected by itself. That is, an optimized autonomous driving model, which is obtained by using the driving instructions fedback by the assistance device and the collected current scene information to optimize the current autonomous driving model, is capable of processing the aforementioned scene information. The optimized autonomous driving model can be used as an autonomous driving model for the driving device to perform a following autonomous driving task. It should be noted that the optimization process may be performed by the driving device provided by the present application, or may be performed by a cloud server, and may also be performed by the assistance device, where this embodiment is exemplified by taking the driving device as the execution body.

By adopting such an autonomous driving assistance method that is optimized continuously, the autonomous driving model has the processing manner of keeping learning more complicated scene information, thereby improving its ability of processing and outputting regarding various complex terrains.

According to the autonomous driving assistance method provided by the present invention, a driving device processes collected current scene information by using a current autonomous driving model, and initiates an assistance driving request to an assistance device according to a processing result; receives and performs a driving instruction fedback by the assistance device, where the driving instruction is used to optimize the current autonomous driving model in conjunction with the current scene information, so as to perform a following autonomous driving task by using an optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

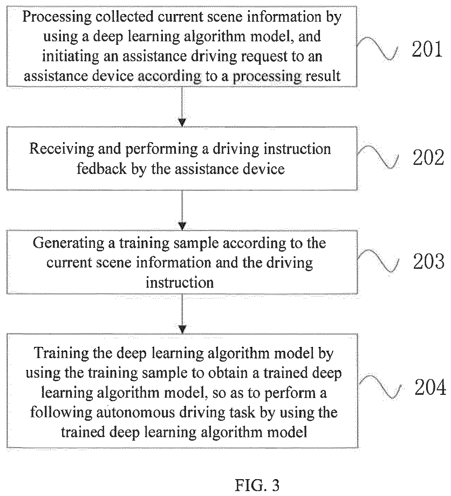

Based on Embodiment 1, FIG. 3 is a schematic flowchart diagram of an autonomous driving assistance method according to Embodiment 2 of the present invention. It should be noted that, the autonomous driving assistance method in Embodiment 2 is exemplified by taking a driving device as the execution body for optimizing a deep learning algorithm model. In other alternative implementations, it can also be an assistance device, a cloud server, and the like to optimize the deep learning algorithm model.

As shown in FIG. 3, the autonomous driving assistance method includes:
Step 201, processing collected current scene information by using a deep learning algorithm model, and initiating an assistance driving request to an assistance device according to a processing result.
Step 202, receiving and performing a driving instruction fedback by the assistance device.
Step203, generating a training sample according to the current scene information and the driving instruction.
Step204, training the deep learning algorithm model by using the training sample to obtain a trained deep learning algorithm model, so as to perform a following autonomous driving task by using the trained deep learning algorithm model.

Different from Embodiment 1, in Embodiment 2, the autonomous driving model includes a deep learning algorithm model, where the deep learning algorithm model specifically includes, but is not limited to, a neural belief network model, a convolutional neural network model, and a recursive neural network model. In Embodiment 2, first, during performing the autonomous driving task, the driving device needs to continuously receive current scene information collected by a collecting module on a motorized device, where the collecting module includes an image capturing device set on the motorized device, and may further include a sensor unit set within the motorized device for sensing or testing an operational status and operational parameters of the motorized device. After the driving device receives the current scene information, the driving device inputs the current scene information into the deep learning algorithm model, where the information is analyzed and processed by the deep learning algorithm model to output a processing result. The processing result output from the deep learning algorithm model includes a matching degree for each driving instruction in the current scene, and an autonomous driving instruction that most matches the current scene.

The driving device may initiate the assistance driving request to the assistance device according to the processing result, so that the assistance device returns a corresponding driving instruction to the driving device, in a way of triggering the driving instruction by a user, after receiving the assisting driving request initiated by the driving device. The driving device may execute the driving instruction after receiving it.

In the present embodiment, in the case that a driving device needs to initiate an assisting driving request to an assistance device, it can train a current deep learning algorithm model again by using a received driving instruction fedback by the assistance device and current scene information collected by itself. That is, after receiving the driving instruction, the driving device may generate a training sample for training the deep learning algorithm model by using the driving instruction and the current scene information. Subsequently, the deep learning algorithm model is trained by using the training sample to obtain a trained deep learning algorithm model, so as to perform a following autonomous driving task by using the trained deep learning algorithm model. By adopting the manner of keeping a deep learning algorithm model learning from a training sample, the deep learning algorithm model can be perfected, its ability of processing and outputting regarding various complex terrains can also be improved.

According to the autonomous driving assistance method provided by the present invention, a driving device processes collected current scene information by using a current autonomous driving model, and initiates an assistance driving request to an assistance device according to a processing result; receives and performs a driving instruction fedback by the assistance device, where the driving instruction is used to optimize the current autonomous driving model in conjunction with the current scene information, so as to perform a following autonomous driving task by using an optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

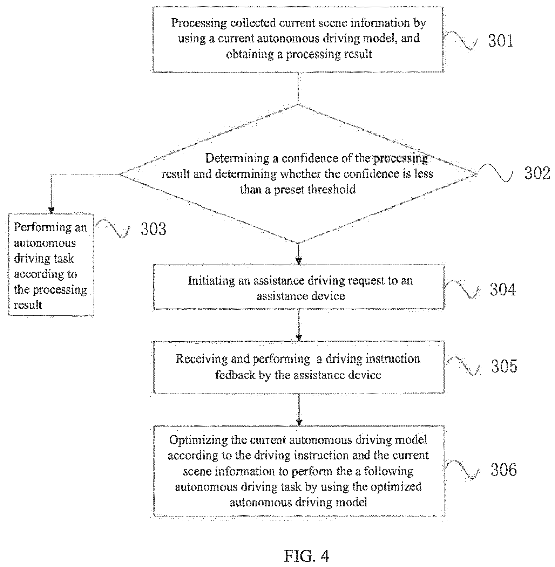

Based on Embodiment 1 or Embodiment 2, FIG. 4 is a schematic flowchart diagram of an autonomous driving assistance method according to Embodiment 3 of the present invention. It should be noted that, the autonomous driving assistance method in Embodiment 2 is exemplified by taking a driving device as the execution body for optimizing a deep learning algorithm model. In other alternative implementations, it can also be an assistance device, a cloud server, and the like to optimize the deep learning algorithm model.

As shown in FIG. 4, the autonomous driving assistance method includes:
Step301, processing collected current scene information by using a current autonomous driving model, and obtaining a processing result.
Step302, determining a confidence of the processing result and determining whether the confidence is less than a preset threshold.

If the confidence is less than the preset threshold, Step 304 is executed; otherwise, Step 303 is executed.

Step303, performing an autonomous driving task according to the processing result.

Step304, initiating an assistance driving request to an assistance device.

Step305, receiving and performing a driving instruction fedback by the assistance device.

Step306, optimizing the current autonomous driving model according to the driving instruction and the current scene information to perform a following autonomous driving task by using the optimized autonomous driving model.

Different from Embodiment 1, the third embodiment provides an autonomous driving assistance method, first, during performing the autonomous driving task, the driving device needs to continuously receive current scene information collected by a collecting module on a motorized device, where the collecting module includes an image capturing device set on the motorized device, and may further include a sensor unit set within the motorized device for sensing or testing an operational status and operational parameters of the motorized device. After the driving device receives the current scene information, the driving device inputs the current scene information into the current autonomous driving model, where the information is analyzed and processed by the autonomous driving model to output a processing result.

Next, the driving device determines the confidence of the processing result, when the confidence is greater than or equal to the preset threshold, the driving device directly processes the result to perform the autonomous driving task; otherwise, it initiates the assistance driving request to the assistance device. The preset threshold of the confidence maybe, for example, 50%.

Similar to the previous embodiments, the driving device may initiate the assistance driving request to the assistance device according to the processing result, so that the assistance device returns a corresponding driving instruction to the driving device, in a way of triggering the driving instruction by a user, after receiving the assisting driving request initiated by the driving device. The driving device may execute the driving instruction after receiving it

In order to improve intelligence of the driving device to enable it to identify more complex terrain, in the case that a driving device needs to initiate an assisting driving request to an assistance device, it can optimize a current autonomous driving model by using a received driving instruction fedback by the assistance device and current scene information collected by itself. That is, an optimized autonomous driving model, which is obtained by optimizing the current autonomous driving model using the driving instructions fedback by the assistance device and the collected current scene, is capable of processing the aforementioned scene information. The optimized autonomous driving model can be used as an autonomous driving model for the driving device to perform a following autonomous driving task. By adopting such an autonomous driving assistance method that is optimized continuously, the autonomous driving model has the processing manner of keeping learning more complicated scene information, thereby improving its ability of processing and outputting regarding various complex terrains.

According to the autonomous driving assistance method provided by the present invention, a driving device processes collected current scene information by using a current autonomous driving model, and initiates an assistance driving request to an assistance device according to a processing result; receives and performs a driving instruction fedback by the assistance device; optimizes the current autonomous driving model according to the driving instruction and the current scene information to perform a following autonomous driving task by using an optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

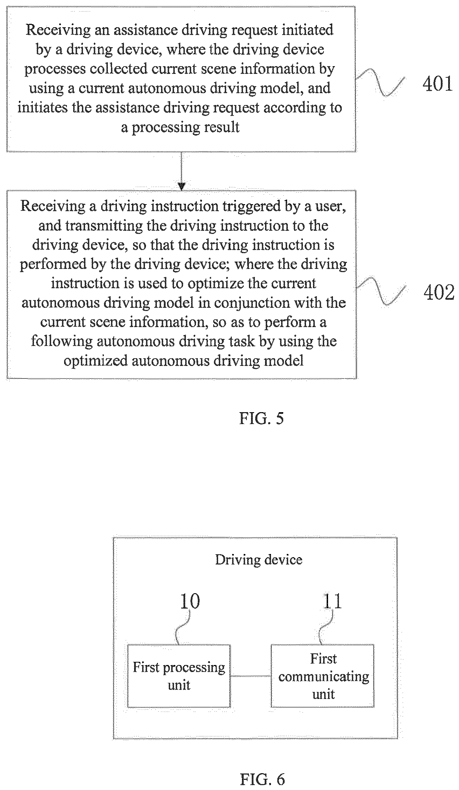

FIG. 5 is a schematic flowchart diagram of an autonomous driving assistance method according to Embodiment 4 of the present invention.

As shown in FIG. 5, the autonomous driving assistance method includes:
Step401, receiving an assistance driving request initiated by a driving device, where the driving device processes collected current scene information by using a current autonomous driving model, and initiates the assistance driving request according to a processing result;
Step402, receiving a driving instruction triggered by a user, and transmitting the driving instruction to the driving device, so that the driving instruction is performed by the driving device; where the driving instruction is used to optimize the current autonomous driving model in conjunction with the current scene information, so as to perform a following autonomous driving task by using the optimized autonomous driving model.

It should be noted that the execution body of the autonomous driving assistance method provided by the present invention may specifically be an assistance device shown in FIG. 1. Specifically, the assisting driving device is an interactive terminal arranged at a remote end that is communicating with the driving device remotely, or an interactive device arranged in a motorized device that has near field communications with the driving device. During performing the autonomous driving task, the driving device continuously collects scene information and processes the current scene information by using the autonomous driving model, so as to perform the autonomous driving task. When a result output from the autonomous driving model triggers an assistance autonomous driving function, the driving device will initiate an assistance driving request to the assistance device. The assistance device can then interact with a user and transmit the driving instruction triggered by user to the driving device for execution, and the driving device optimizes the autonomous driving model deployed in it. A manner of interaction may include presenting current scene information to the user and accepting the driving instruction input by the user through a hardware device, where the hardware device includes, but are not limited to, a keyboard, a mouse, a touch screen, and the like. Optionally, the driving request and the driving instruction are transmitted to the driving device through a wireless mobile network. Optionally, the driving request and driving instruction are transmitted to the driving device through near field communication technology.

According to the autonomous driving assistance method provided by the present invention, a driving device processes collected current scene information by using a current autonomous driving model, and initiates an assistance driving request to an assistance device according to a processing result; receives and performs a driving instruction fedback by the assistance device, where the driving instruction is used to optimize the current autonomous driving model in conjunction with the current scene information, so as to perform a following autonomous driving task by using an optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

FIG. 6 is a schematic structural diagram of a driving device according to Embodiment 5 of the present invention. As shown in FIG. 6, the driving device includes:
a first processing unit 10, configured to process collected current scene information by using a current autonomous driving model, and obtain a processing result;
a first communicating unit 11, configured to initiate an assistance driving request to an assistance device according to the processing result; and further configured to receive a driving instruction fedback by the assistance device, so that the driving instruction is performed by the driving device, where the driving instruction is used to optimize the current autonomous driving model in conjunction with the current scene information, so as to perform a following autonomous driving task by using the optimized autonomous driving model.

In an alternative embodiment, the autonomous driving model includes a deep learning algorithm model;
The driving instruction is specifically used to generate a training sample in conjunction with the current scene information; train the deep learning algorithm model by using the training sample to obtain a trained deep learning algorithm model; where the trained deep learning algorithm model is the optimized autonomous driving model.

The first processing unit 10 is further configured to determine a confidence of the processing result; when the confidence is less than a preset threshold, the communicating unit initiates the assistance driving request to the assistance device.

When the confidence is greater than or equal to the preset threshold, the driving device performs an autonomous driving task according to the processing result.

A person skilled in the art can clearly understand that for the sake of convenience and brevity of the description, specific working processes of the system described above and corresponding beneficial effects can be referred to the corresponding processes in the foregoing method embodiments, which are not described herein again.

According to the driving device provided by the present invention, a driving device processes collected current scene information by using a current autonomous driving model, and initiates an assistance driving request to an assistance device according to a processing result; receives and performs a driving instruction fedback by the assistance device, where the driving instruction is used to optimize the current autonomous driving model in conjunction with the current scene information, so as to perform a following autonomous driving task by using the optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

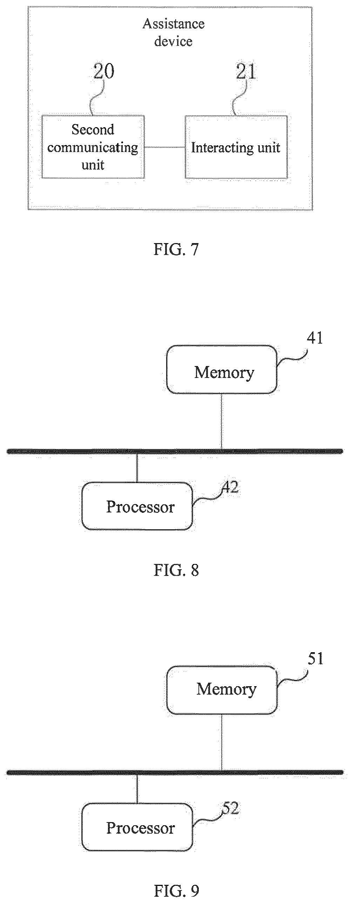

FIG. 7 is a schematic structural diagram of an assistance device according to Embodiment 6 of the present invention. As shown in FIG. 7, the assistance device includes:
a second communicating unit 20, configured to receive an assistance driving request initiated by a driving device, where the driving device processes collected current scene information by using a current autonomous driving model, and initiates the assistance driving request according to a processing result;
an interacting unit 21, configured to receive a driving instruction triggered by a user; and
the second communicating unit 20 is further configured to transmit the driving instruction to the driving device, so that the driving instruction is performed by the driving device; where the driving instruction is used to optimize the current autonomous driving model in conjunction with the current scene information, so as to perform a following autonomous driving task by using the optimized autonomous driving model.

The driving instruction is transmitted by the second communicating unit 20 to the driving device through a wireless mobile network.

The driving instruction is transmitted by the second communicating unit 20 to the driving device through near field communication technology.

A person skilled in the art can clearly understand that for the sake of convenience and brevity of the description, specific working processes of the system described above and corresponding beneficial effects can be referred to the corresponding processes in the foregoing method embodiments, which are not described herein again.

According to the driving device provided by the present invention, a driving device processes collected current scene information by using a current autonomous driving model, and initiates an assistance driving request to an assistance device according to a processing result; receives and performs a driving instruction fedback by the assistance device, where the driving instruction is used to optimize the current autonomous driving model in conjunction with the current scene information, so as to perform a following autonomous driving task by using an optimized autonomous driving model. Therefore, a problem, that when performing an autonomous driving task, an existing deriving device fails to continue performing the autonomous driving task since a preset autonomous driving model cannot process scene information, can be solved, improving intelligence and applicability of the autonomous driving model.

FIG. 8 is a schematic diagram of a hardware structure of a driving device according to Embodiment 7 of the present invention. As shown in FIG. 8, the driving device includes a processor 42 and a computer program stored on the memory 41 and executable on the processor 42, where when executing the computer program, the processor 42 executes the methods according to Embodiments 1-3 mentioned above.

FIG. 9 is a schematic diagram of a hardware structure of an assistance device according to Embodiment 8 of the present invention. As shown in FIG. 9, the assistance device includes a processor 52 and a computer program stored on the memory 51 and executable on the processor 52, where when executing the computer program, the processor 52 executes the method according to Embodiment 4 mentioned above.

The present invention provides a readable storage medium including a program that, when being executed on a terminal, causes the terminal to implement the methods according to Embodiments 1-3 mentioned above.

The present invention provides a readable storage medium including a program that, when being executed on a terminal, causes the terminal to implement the method according to Embodiment 4 mentioned above.

It will be understood by those skilled in the art that all or part of steps of the foregoing method embodiments may be implemented by a hardware related to program instructions. The aforementioned program can be stored in a computer readable storage medium. When the program is executed, a step including the above mentioned method embodiments is implemented; and the foregoing storage medium includes various media that can store program codes, such as a ROM, a RAM, a magnetic disk, or an optical disk.

At last, it should be noted that the above embodiments are only used to illustrate the technical solutions of the present invention, but are not limited thereto; although the present invention has been described in detail with reference to the foregoing embodiments, it will be understood by those of ordinary skill in the art that the technical solutions described in the foregoing embodiments may be modified or equivalently substituted for some or all of the technical features; while the modifications and substitutions will not make the nature of corresponding technical solution depart from the scope of the technical solution in respective embodiments of the present invention. The present invention being defined by the appended claims.

## Claims

1. An autonomous driving assistance method, comprising:
processing (101) collected current scene information by using a current autonomous driving model preset in a driving device, and initiating an assistance driving request to an assistance device according to a processing result that the current autonomous driving model does not have capability of processing the current scene information, wherein the assistance device is an interactive terminal arranged at a remote end that is communicating with the driving device remotely;
receiving and performing (102) a driving instruction fedback by the assistance device, wherein the driving instruction is used to optimize the current autonomous driving model in conjunction with current scene information, so as to perform a following autonomous driving task by using the optimized autonomous driving model, wherein the driving instruction is triggered by a user;
wherein the processing (101) collected current scene information by using the current autonomous driving model, and initiating the assistance driving request to the assistance device according to the processing result comprises:
processing the collected current scene information by using the current autonomous driving model to obtain the processing result;
determining a confidence of the processing result;
initiating the assistance driving request to the assistance device, when the confidence is less than a preset threshold;
wherein the processing result comprises a matching degree for each driving instruction in a current scene and an autonomous driving instruction that most matches the current scene.

2. The autonomous driving assistance method according to claim 1, wherein the autonomous driving model comprises a deep learning algorithm model;
the driving instruction is specifically used to generate a training sample in conjunction with the current scene information; training the deep learning algorithm model by using the training sample to obtain a trained deep learning algorithm model; wherein the trained deep learning algorithm model is the optimized autonomous driving model.

3. An autonomous driving assistance method, comprising:
receiving (401) an assistance driving request initiated by a driving device, wherein the driving device processes collected current scene information by using a current autonomous driving model preset in the driving device and initiates the assistance driving request to an assistance device according to a processing result that the current autonomous driving model does not have capability of processing the current scene information, wherein the assistance device is an interactive terminal arranged at a remote end that is communicating with the driving device remotely;
receiving (402) a driving instruction triggered by a user, and transmitting the driving instruction to the driving device, so that the driving instruction is performed by the driving device; wherein the driving instruction is used to optimize the current autonomous driving model in conjunction with current scene information, so as to perform a following autonomous driving task by using the optimized autonomous driving model;
wherein the driving device processes collected current scene information by using the current autonomous driving model, and initiates the assistance driving request to the assistance device according to the processing result comprises:
processing the collected current scene information by using the current autonomous driving model to obtain the processing result;
determining a confidence of the processing result;
initiating the assistance driving request to the assistance device, when the confidence is less than a preset threshold;
wherein the processing result comprises a matching degree for each driving instruction in a current scene and an autonomous driving instruction that most matches the current scene.

4. The autonomous driving assistance method according to claim 3, wherein the driving request and the driving instruction are transmitted to the driving device through a wireless mobile network.

5. The autonomous driving assistance method according to claim 3, wherein the driving request and the driving instruction are transmitted to the driving device through near field communication technology.

6. A driving device, comprising:
a first processing unit (10), configured to process collected current scene information by using a current autonomous driving model preset in the driving device, and obtain a processing result;
a first communicating unit (11), configured to initiate an assistance driving request to an assistance device according to the processing result that the current autonomous driving model does not have capability of processing the current scene information, wherein the assistance device is an interactive terminal arranged at a remote end that is communicating with the driving device remotely; and further configured to receive a driving instruction fedback by the assistance device, so that the driving instruction is performed by the driving device, wherein the driving instruction is used to optimize the current autonomous driving model in conjunction with current scene information, so as to perform a following autonomous driving task by using the optimized autonomous driving model, wherein the driving instruction is triggered by a user;
wherein the first processing unit (10) is also configured to determine a confidence of the processing result; when the confidence is less than a preset threshold, the first communicating unit (11) initiates the assistance driving request to the assistance device; wherein the processing result comprises a matching degree for each driving instruction in a current scene and an autonomous driving instruction that most matches the current scene.

7. The driving device according to claim 6, wherein the autonomous driving model comprises a deep learning algorithm model; and
the driving instruction is specifically used to generate a training sample in conjunction with the current scene information; train the deep learning algorithm model by using the training sample to obtain a trained deep learning algorithm model; wherein the trained deep learning algorithm model is the optimized autonomous driving model.

8. An assistance device, wherein the assistance device is an interactive terminal arranged at a remote end that is communicating with a driving device remotely, comprising:
a second communicating unit (20), configured to receive an assistance driving request initiated by the driving device, wherein the driving device processes collected current scene information by using a current autonomous driving model preset in the driving device, and initiates the assistance driving request to an assistance device according to a processing result that the current autonomous driving model does not have capability of processing the current scene information;
an interacting unit (21), configured to receive a driving instruction triggered by a user;
the second communicating unit (20) is further configured to transmit the driving instruction to the driving device, so that the driving instruction is performed by the driving device; wherein the driving instruction is used to optimize the current autonomous driving model in conjunction with current scene information, so as to perform a following autonomous driving task by using the optimized autonomous driving model;
wherein the driving device processes collected current scene information by using the current autonomous driving model, and initiates the assistance driving request to the assistance device according to the processing result comprises:
processing the collected current scene information by using the current autonomous driving model to obtain the processing result;
determining a confidence of the processing result;
initiating the assistance driving request to the assistance device, when the confidence is less than a preset threshold;
wherein the processing result comprises a matching degree for each driving instruction in a current scene and an autonomous driving instruction that most matches the current scene.

9. The assistance device according to claim 8, wherein the driving request and the driving instruction are transmitted by the second communicating unit (20) to the driving device through a wireless mobile network.

10. The assistance device according to claim 8, wherein the driving request and the driving instruction are transmitted by the second communicating unit (20) to the driving device through near field communication technology.

## Patentansprüche

1. Autonomes Fahrhilfsverfahren, umfassend:
Verarbeiten (101) von gesammelten aktuellen Szeneninformationen unter Verwendung eines aktuellen autonomen Fahrmodells, das in einer Fahrvorrichtung vorab eingestellt ist, und Einleiten einer Fahrhilfsanfrage an eine Hilfsvorrichtung gemäß einem Verarbeitungsergebnis, dass das aktuelle autonome Fahrmodell nicht die Fähigkeit besitzt, die aktuellen Szeneninformationen zu verarbeiten, wobei die Hilfsvorrichtung ein interaktives Endgerät ist, das an einem entfernten Ende eingerichtet ist, das mit der Fahrvorrichtung entfernt kommuniziert;
Empfangen und Durchführen (102) einer Fahranweisung, die von der Hilfsvorrichtung rückgemeldet wird, wobei die Fahranweisung verwendet wird, um das aktuelle autonome Fahrmodell zusammen mit aktuellen Szeneninformationen zu optimieren, um eine folgende autonome Fahraufgabe unter Verwendung des optimierten autonomen Fahrmodells durchzuführen, wobei die Fahranweisung von einem Benutzer ausgelöst wird;
wobei das Verarbeiten (101) von gesammelten aktuellen Szeneninformationen unter Verwendung des aktuellen autonomen Fahrmodells und Einleiten der Hilfsfahranfrage an die Hilfsvorrichtung gemäß dem Verarbeitungsergebnis umfasst:
Verarbeiten der gesammelten aktuellen Szeneninformationen unter Verwendung des aktuellen autonomen Fahrmodells, um das Verarbeitungsergebnis zu erhalten;
Bestimmen einer Konfidenz des Verarbeitungsergebnisses;
Einleiten der Hilfsfahranfrage an die Hilfsvorrichtung, wenn die Konfidenz geringer als eine vorab eingestellte Schwelle ist;
wobei das Verarbeitungsergebnis einen Übereinstimmungsgrad für jede Fahranweisung in einer aktuellen Szene und eine autonome Fahranweisung, die mit der aktuellen Szene am meisten übereinstimmt, umfasst.

2. Autonomes Fahrhilfsverfahren nach Anspruch 1, wobei das autonome Fahrmodell ein Tiefenlernalgorithmusmodell umfasst;
die Fahranweisung spezifisch dazu verwendet wird, ein Trainingsmuster zusammen mit den aktuellen Szeneninformationen zu erzeugen; das Tiefenlernalgorithmusmodell unter Verwendung des Trainingsmusters trainiert, um ein trainiertes Tiefenlernalgorithmusmodell zu erhalten; wobei das trainierte Tiefenlernalgorithmusmodell das optimierte autonome Fahrmodell ist.

3. Autonomes Fahrhilfsverfahren, umfassend:
Empfangen (401) einer Hilfsfahranfrage, die von einer Fahrvorrichtung eingeleitet wird, wobei die Fahrvorrichtung gesammelte aktuelle Szeneninformationen unter Verwendung eines aktuellen autonomen Fahrmodells, das in der Fahrvorrichtung vorab eingestellt ist, verarbeitet und die Hilfsfahranfrage an eine Hilfsvorrichtung gemäß einem Verarbeitungsergebnis, dass das aktuelle autonome Fahrmodell nicht die Fähigkeit besitzt, die aktuellen Szeneninformationen zu verarbeiten, einleitet, wobei die Hilfsvorrichtung ein interaktives Endgerät ist, das an einem entfernten Ende eingerichtet ist, das mit der Fahrvorrichtung entfernt kommuniziert;
Empfangen (402) einer Fahranweisung, die von einem Benutzer ausgelöst wird, und Übertragen der Fahranweisung an die Fahrvorrichtung, sodass die Fahranweisung von der Fahrvorrichtung durchgeführt wird; wobei die Fahranweisung verwendet wird, um das aktuelle autonome Fahrmodell zusammen mit aktuellen Szeneninformationen zu optimieren, um eine folgende autonome Fahraufgabe unter Verwendung des optimierten autonomen Fahrmodells durchzuführen;
wobei die Fahrvorrichtung gesammelte aktuelle Szeneninformationen unter Verwendung des aktuellen autonomen Fahrmodells verarbeitet und die Hilfsfahranfrage an die Hilfsvorrichtung gemäß dem Verarbeitungsergebnis einleitet, umfasst:
Verarbeiten der gesammelten aktuellen Szeneninformationen unter Verwendung des aktuellen autonomen Fahrmodells, um das Verarbeitungsergebnis zu erhalten;
Bestimmen einer Konfidenz des Verarbeitungsergebnisses;
Einleiten der Hilfsfahranfrage an die Hilfsvorrichtung, wenn die Konfidenz geringer als eine vorab eingestellte Schwelle ist;
wobei das Verarbeitungsergebnis einen Übereinstimmungsgrad für jede Fahranweisung in einer aktuellen Szene und eine autonome Fahranweisung, die mit der aktuellen Szene am meisten übereinstimmt, umfasst.

4. Autonomes Fahrhilfsverfahren nach Anspruch 3, wobei die Fahranfrage und die Fahranweisung über ein drahtloses mobiles Netzwerk an die Fahrvorrichtung übertragen werden.

5. Autonomes Fahrhilfsverfahren nach Anspruch 3, wobei die Fahranfrage und die Fahranweisung über Nahfeldkommunikationstechnologie an die Fahrvorrichtung übertragen werden.

6. Fahrvorrichtung, umfassend:
eine erste Verarbeitungseinheit (10), die konfiguriert ist, um gesammelte aktuelle Szeneninformationen unter Verwendung eines aktuellen autonomen Fahrmodells, das in der Fahrvorrichtung vorab eingestellt ist, zu verarbeiten, und ein Verarbeitungsergebnis zu erhalten;
eine erste Kommunikationseinheit (11), die konfiguriert ist, um eine Hilfsfahranfrage an eine Hilfsvorrichtung gemäß dem Verarbeitungsergebnis, dass das aktuelle autonome Fahrmodell nicht die Fähigkeit besitzt, die aktuellen Szeneninformationen zu verarbeiten, einzuleiten, wobei die Hilfsvorrichtung ein interaktives Endgerät ist, das an einem entfernten Ende eingerichtet ist, das mit der Fahrvorrichtung entfernt kommuniziert; und weiter konfiguriert ist, um eine Fahranweisung, die von der Hilfsvorrichtung rückgemeldet wird, zu empfangen, sodass die Fahranweisung von der Fahrvorrichtung durchgeführt wird, wobei die Fahranweisung verwendet wird, um das aktuelle autonome Fahrmodell zusammen mit den aktuellen Szeneninformationen zu optimieren, um eine folgende autonome Fahraufgabe unter Verwendung des optimierten autonomen Fahrmodells durchzuführen, wobei die Fahranweisung von einem Benutzer ausgelöst wird;
wobei die erste Verarbeitungseinheit (10) auch konfiguriert ist, um eine Konfidenz des Verarbeitungsergebnisses zu bestimmen; wenn die Konfidenz geringer ist als eine vorab eingestellte Schwelle, leitet die erste Kommunikationseinheit (11) die Hilfsfahranfrage an die Hilfsvorrichtung ein; wobei das Verarbeitungsergebnis einen Übereinstimmungsgrad für jede Fahranweisung in einer aktuellen Szene und eine autonome Fahranweisung, die mit der aktuellen Szene am meisten übereinstimmt, umfasst.

7. Fahrvorrichtung nach Anspruch 6, wobei das autonome Fahrmodell ein Tiefenlernalgorithmusmodell umfasst; und
die Fahranweisung spezifisch dazu verwendet wird, ein Trainingsmuster zusammen mit den aktuellen Szeneninformationen zu erzeugen; das Tiefenlernalgorithmusmodell unter Verwendung des Trainingsmusters trainiert, um ein trainiertes Tiefenlernalgorithmusmodell zu erhalten; wobei das trainierte Tiefenlernalgorithmusmodell das optimierte autonome Fahrmodell ist.

8. Hilfsvorrichtung, wobei die Hilfsvorrichtung ein interaktives Endgerät ist, das an einem entfernten Ende eingerichtet ist, das mit einer Fahrvorrichtung entfernt kommuniziert, umfassend:
eine zweite Kommunikationseinheit (20), die konfiguriert ist, um eine Hilfsfahranfrage zu empfangen, die von der Fahrvorrichtung eingeleitet wird, wobei die Fahrvorrichtung gesammelte aktuelle Szeneninformationen unter Verwendung eines aktuellen autonomen Fahrmodells, das in der Fahrvorrichtung vorab eingestellt ist, verarbeitet und die Hilfsfahranfrage an die Hilfsvorrichtung gemäß einem Verarbeitungsergebnis, dass das aktuelle autonome Fahrmodell nicht die Fähigkeit besitzt, die aktuellen Szeneninformationen zu verarbeiten, einleitet;
eine interagierende Einheit (21), die konfiguriert ist, um eine Fahranweisung, die von einem Benutzer ausgelöst wird, zu empfangen;
wobei die zweite Kommunikationseinheit (20) weiter konfiguriert ist, um die Fahranweisung an die Fahrvorrichtung zu übertragen, sodass die Fahranweisung von der Fahrvorrichtung durchgeführt wird; wobei die Fahranweisung verwendet wird, um das aktuelle autonome Fahrmodell zusammen mit aktuellen Szeneninformationen zu optimieren, um eine folgende autonome Fahraufgabe unter Verwendung des optimierten autonomen Fahrmodells durchzuführen;
wobei die Fahrvorrichtung gesammelte aktuelle Szeneninformationen unter Verwendung des aktuellen autonomen Fahrmodells verarbeitet und die Hilfsfahranfrage an die Hilfsvorrichtung gemäß dem Verarbeitungsergebnis einleitet, umfasst:
Verarbeiten der gesammelten aktuellen Szeneninformationen unter Verwendung des aktuellen autonomen Fahrmodells, um das Verarbeitungsergebnis zu erhalten;
Bestimmen einer Konfidenz des Verarbeitungsergebnisses;
Einleiten der Hilfsfahranfrage an die Hilfsvorrichtung, wenn die Konfidenz geringer als eine vorab eingestellte Schwelle ist;
wobei das Verarbeitungsergebnis einen Übereinstimmungsgrad für jede Fahranweisung in einer aktuellen Szene und eine autonome Fahranweisung, die mit der aktuellen Szene am meisten übereinstimmt, umfasst.

9. Hilfsvorrichtung nach Anspruch 8, wobei die Fahranfrage und die Fahranweisung von der zweiten Kommunikationseinheit (20) über ein drahtloses mobiles Netzwerk an die Fahrvorrichtung übertragen werden.

10. Hilfsvorrichtung nach Anspruch 8, wobei die Fahranfrage und die Fahranweisung von der zweiten Kommunikationseinheit (20) über Nahfeldkommunikationstechnologie an die Fahrvorrichtung übertragen werden.

## Revendications

1. Procédé d'assistance à la conduite autonome, comprenant les étapes consistant à :
traiter (101) des informations de scène actuelles collectées en utilisant un modèle de conduite autonome actuel prédéfini dans un dispositif de conduite, et initier une demande de conduite d'assistance à un dispositif d'assistance en fonction d'un résultat de traitement selon lequel le modèle de conduite autonome actuel n'a pas la capacité de traiter les informations de scène actuelles, dans lequel le dispositif d'assistance est un terminal interactif agencé à une extrémité distante qui communique à distance avec le dispositif de conduite ;
recevoir et exécuter (102) une instruction de conduite renvoyée par le dispositif d'assistance, dans lequel l'instruction de conduite est utilisée pour optimiser le modèle de conduite autonome actuel conjointement avec des informations de scène actuelles, de manière à effectuer une tâche de conduite autonome suivante en utilisant le modèle de conduite autonome optimisé, dans lequel l'instruction de conduite est déclenchée par un utilisateur ;
dans lequel le traitement (101) d'informations de scène actuelles collectées en utilisant le modèle de conduite autonome actuel, et l'initiation d'une demande de conduite d'assistance au dispositif d'assistance en fonction du résultat de traitement comprennent les étapes consistant à :
traiter les informations de scène actuelles collectées en utilisant le modèle de conduite autonome actuel pour obtenir le résultat de traitement ;
déterminer une confiance du résultat de traitement ;
initier la demande de conduite d'assistance au dispositif d'assistance, quand la confiance est inférieure à un seuil prédéfini ;
dans lequel le résultat de traitement comprend un degré de mise en correspondance pour chaque instruction de conduite dans une scène actuelle et une instruction de conduite autonome qui correspond le mieux à la scène actuelle.

2. Procédé d'assistance à la conduite autonome selon la revendication 1, dans lequel le modèle de conduite autonome comprend un modèle d'algorithme d'apprentissage profond ;
l'instruction de conduite est spécifiquement utilisée pour générer un échantillon d'apprentissage conjointement avec les informations de scène actuelles ; le modèle d'algorithme d'apprentissage profond est entraîné en utilisant l'échantillon d'apprentissage pour obtenir un modèle d'algorithme d'apprentissage profond entraîné ; dans lequel le modèle d'algorithme d'apprentissage profond entraîné est le modèle de conduite autonome optimisé.

3. Procédé d'assistance à la conduite autonome, comprenant les étapes consistant à :
recevoir (401) une demande d'assistance à la conduite initiée par un dispositif de conduite, dans lequel le dispositif de conduite traite des informations de scène actuelles collectées en utilisant un modèle de conduite autonome actuel prédéfini dans le dispositif de conduite et initie la demande de conduite d'assistance à un dispositif d'assistance en fonction d'un résultat de traitement selon lequel le modèle de conduite autonome actuel n'a pas la capacité de traiter les informations de scène actuelles, dans lequel le dispositif d'assistance est un terminal interactif agencé à une extrémité distante qui communique à distance avec le dispositif de conduite ;
recevoir (402) une instruction de conduite déclenchée par un utilisateur, et transmettre l'instruction de conduite au dispositif de conduite, de façon que l'instruction de conduite soit exécutée par le dispositif de conduite ; dans lequel l'instruction de conduite est utilisée pour optimiser le modèle de conduite autonome actuel conjointement avec des informations de scène actuelles, de manière à effectuer une tâche de conduite autonome suivante en utilisant le modèle de conduite autonome optimisé ;
dans lequel le dispositif de conduite traite des informations de scène actuelles collectées en utilisant le modèle de conduite autonome actuel, et initie la demande de conduite d'assistance au dispositif d'assistance en fonction du résultat de traitement, comprend les étapes consistant à :
traiter les informations de scène actuelles collectées en utilisant le modèle de conduite autonome actuel pour obtenir le résultat de traitement ;
déterminer une confiance du résultat de traitement ;
initier la demande de conduite d'assistance au dispositif d'assistance, quand la confiance est inférieure à un seuil prédéfini ;
dans lequel le résultat de traitement comprend un degré de mise en correspondance pour chaque instruction de conduite dans une scène actuelle et une instruction de conduite autonome qui correspond le mieux à la scène actuelle.

4. Procédé d'assistance à la conduite autonome selon la revendication 3, dans lequel la demande de conduite et l'instruction de conduite sont transmises au dispositif de conduite par l'intermédiaire d'un réseau mobile sans fil.

5. Procédé d'assistance à la conduite autonome selon la revendication 3, dans lequel la demande de conduite et l'instruction de conduite sont transmises au dispositif de conduite par l'intermédiaire d'une technologie de communication en champ proche.

6. Dispositif de conduite, comprenant :
une première unité de traitement (10), configurée pour traiter des informations de scène actuelles collectées en utilisant un modèle de conduite autonome actuel prédéfini dans le dispositif de conduite, et obtenir un résultat de traitement ;
une première unité de communication (11), configurée pour initier une demande d'assistance à la conduite à un dispositif d'assistance en fonction du résultat de traitement selon lequel le modèle de conduite autonome actuel n'a pas la capacité de traiter les informations de scène actuelles, dans lequel le dispositif d'assistance est un terminal interactif agencé à une extrémité distante qui communique à distance avec le dispositif de conduite ; et configurée en outre pour recevoir une instruction de conduite renvoyée par le dispositif d'assistance, de sorte que l'instruction de conduite est exécutée par le dispositif de conduite, dans lequel l'instruction de conduite est utilisée pour optimiser le modèle de conduite autonome actuel conjointement avec des informations de scène actuelles, de manière à effectuer une tâche de conduite autonome suivante en utilisant le modèle de conduite autonome optimisé, dans lequel l'instruction de conduite est déclenchée par un utilisateur ;
dans lequel la première unité de traitement (10) est également configurée pour déterminer une confiance du résultat de traitement ; quand la confiance est inférieure à un seuil prédéfini, la première unité de communication (11) initie la demande de conduite d'assistance au dispositif d'assistance ; dans lequel le résultat de traitement comprend un degré de mise en correspondance pour chaque instruction de conduite dans une scène actuelle et une instruction de conduite autonome qui correspond le mieux à la scène actuelle.

7. Dispositif de conduite selon la revendication 6, dans lequel le modèle de conduite autonome comprend un modèle d'algorithme d'apprentissage profond ;
l'instruction de conduite est spécifiquement utilisée pour générer un échantillon d'apprentissage conjointement avec les informations de scène actuelles ; entraîner le modèle d'algorithme d'apprentissage profond en utilisant l'échantillon d'apprentissage pour obtenir un modèle d'algorithme d'apprentissage profond entraîné ; dans lequel le modèle d'algorithme d'apprentissage profond entraîné est le modèle de conduite autonome optimisé.

8. Dispositif d'assistance, dans lequel le dispositif d'assistance est un terminal interactif agencé à une extrémité distante qui communique à distance avec un dispositif de conduite, comprenant :
une seconde unité de communication (20), configurée pour recevoir une demande d'assistance à la conduite initiée par le dispositif de conduite, dans lequel le dispositif de conduite traite des informations de scène actuelles collectées en utilisant un modèle de conduite autonome actuel prédéfini dans le dispositif de conduite, et initie la demande d'assistance à la conduite à un dispositif d'assistance en fonction d'un résultat de traitement selon lequel le modèle de conduite autonome actuel n'a pas la capacité de traiter les informations de scène actuelles ;
une unité d'interaction (21), configurée pour recevoir une instruction de conduite déclenchée par un utilisateur ;
la seconde unité de communication (20) est configurée en outre pour transmettre l'instruction de conduite au dispositif de conduite, de façon que l'instruction de conduite soit exécutée par le dispositif de conduite ; dans lequel l'instruction de conduite est utilisée pour optimiser le modèle de conduite autonome actuel conjointement avec des informations de scène actuelles, de manière à effectuer une tâche de conduite autonome suivante en utilisant le modèle de conduite autonome optimisé ;
dans lequel le dispositif de conduite traite des informations de scène actuelles collectées en utilisant le modèle de conduite autonome actuel, et initie la demande de conduite d'assistance au dispositif d'assistance en fonction du résultat de traitement, comprend les étapes consistant à :
traiter les informations de scène actuelles collectées en utilisant le modèle de conduite autonome actuel pour obtenir le résultat de traitement ;
déterminer une confiance du résultat de traitement ;
initier la demande de conduite d'assistance au dispositif d'assistance, quand la confiance est inférieure à un seuil prédéfini ;
dans lequel le résultat de traitement comprend un degré de mise en correspondance pour chaque instruction de conduite dans une scène actuelle et une instruction de conduite autonome qui correspond le mieux à la scène actuelle.

9. Dispositif d'assistance selon la revendication 8, dans lequel la demande de conduite et l'instruction de conduite sont transmises par la seconde unité de communication (20) au dispositif de conduite par l'intermédiaire d'un réseau mobile sans fil.

10. Dispositif d'assistance selon la revendication 8, dans lequel la demande de conduite et l'instruction de conduite sont transmises par la seconde unité de communication (20) au dispositif de conduite par l'intermédiaire d'une technologie de communication en champ proche.
